# EUROPÄISCHE PATENTSCHRIFT

(11) **EP 2 788 701 B1**
(45) Veröffentlichungstag und Bekanntmachung des Hinweises auf die Patenterteilung: **01.02.2017**
(21) Anmeldenummer: 12808301.1
(22) Anmeldetag: 10.12.2012
(51) Int. Cl.: F26B 3/28, F26B 9/10, F26B 23/00, C02F 11/16, F23G 5/04, F23G 7/00

(54) **VERFAHREN ZUM TROCKNEN VON SCHLAMM**
PROCESS FOR DRYING SLUDGE
PROCÉDÉ DE SÉCHAGE DE BOUES

(30) Priorität: 09.12.2011 DE 102011088174; 05.01.2012 DE 102012200144; 24.01.2012 DE 102012001166; 08.02.2012 DE 102012201846
(43) Veröffentlichungstag der Anmeldung: 15.10.2014
(73) Patentinhaber: TSP GmbH, 70794 Filderstadt-Bernhausen (DE)
(72) Erfinder: BUX, Markus, 72124 Pliezhausen (DE); RITTERBUSCH, Steffen, 70563 Stuttgart (DE); CONRAD, Tilo, 72622 Nürtingen (DE)
(74) Vertreter: Dr. Gassner & Partner mbB
(86) Internationale Anmeldenummer: PCT/EP2012/074950
(87) Internationale Veröffentlichungsnummer: WO 2013/083837

(56) Entgegenhaltungen:
- EP-A1- 1 621 523
- WO-A1-2004/046629
- WO-A1-2007/147181
- DE-A1-102009 033 028
- DE-C2- 19 644 465
- DE-U1- 29 825 058
- US-A1- 2005 247 245

## Beschreibung

Die Erfindung betrifft ein Verfahren zum Trocknen von Schlamm, insbesondere Klärschlamm.

Ein solches Verfahren ist aus der DE 196 44 465 C2 bekannt. Dabei wird dem zu trocknenden Trocknungsgut Wasser bzw. Wasserdampf mit Hilfe eines Niederdrucks bzw. einer Vakuumbeaufschlagung entzogen und der entzogene Wasserdampf kondensiert. Die dadurch freiwerdende Kondensationsenergie wird als rückgewonnene Energie einem Leitungskreislauf, in dem das zu trocknende Gut gefördert wird, als Wärmeenergie zugeführt. Die rückgewonnene Kondensationsenergie kann dabei zur Vor- und/oder Nachtrocknung verwendet werden. Es wird ein erster Trocknungsbereich zur Vortrocknung und zur Nachtrocknung genutzt und ein zweiter Trocknungsbereich zur Haupttrocknung und zur Nachtrocknung. Die Vortrocknung und die Haupttrocknung in den beiden Trocknungsbereichen laufen gleichzeitig ab. Dabei wird ein Wärmemedium zunächst durch den zweiten Trocknungsbereich und danach durch den ersten Trocknungsbereich entgegen der Förderrichtung des zu trocknenden Guts geführt. Die Kondensation des Wasserdampfs kann durch Komprimierung begünstigt werden. Das ist konstruktiv aufwändig und verbraucht verhältnismäßig viel Energie. Durch den für die Trocknung im zweiten Trocknungsbereich zu erzeugenden Unterdruck ist auch eine Vorrichtung zur Durchführung des Verfahrens nur mit relativ hohem konstruktiven Aufwand bereitzustellen und eine kontinuierliche Durchführung der Haupttrocknung unter Aufrechterhaltung des Unterdrucks ist aufwändig. Das Erzeugen des Unterdrucks erfordert ebenfalls verhältnismäßig viel Energie.

Aus der WO 2007/147181 A1 sind ein Verfahren und eine Anlagen zur thermischen Verarbeitung von Feuchtgut, insbesondere Klärschlamm, mit mehreren Trocknungsstufen bekannt. Dabei sind zumindest eine Hochtemperaturtrocknung und eine Niedertemperaturtrocknung vorgesehen, wobei die Abwärme der Hochtemperaturtrocknung zur Beheizung der Niedertemperaturtrocknung verwendet wird. Die Niedertemperaturtrocknung kann als Bandtrocknung ausgebildet sein. Die Abluftleitung des Hochtemperaturtrockners kann, gegebenenfalls über einen Wärmetauscher (17), beispielsweise einen Kondensator, mit der Umluftleitung des Niedertemperaturtrockners verbunden sein. Durch die Zusammenschaltung zweier unterschiedlicher Trocknungsverfahren und die Anpassung der Betriebsparameter kann die Abwärme des Hochtemperaturverfahrens den Energiebedarf des Niedertemperaturverfahrens decken. Die Hochtemperaturtrocknung kann als Wirbelschichttrocknung ausgebildet sein. Der Kondensator wird bei einer Temperatur zwischen 50 und 95°C betrieben, um ein sinnvolles Temperaturniveau für die Energieauskopplung zum Bandtrockner zu bieten.

Aus der DE 10 2004 051 975 B3 ist ein Verfahren zur Trocknung von Klärschlamm bekannt, bei dem der feuchte, zu trocknende Klärschlamm in eine Klärschlammtrocknungseinrichtung eingebracht wird. Dabei wird aus einer einer Wärmequelle, z. B. einer Biomassefeuerung, nachgeschalteten ORC-Anlage eine Niedertemperatur-Abwärme mit einer Niedertemperatur von 50 bis 200°C ausgekoppelt und anschließend als Niedertemperatur-Wärmestrom der Klärschlammtrocknungseinrichtung für eine solche Zeitdauer zugeführt, dass der Klärschlamm thermisch auf einen Trockensubstanz-Gehalt von wenigstens 50 % getrocknet wird. In der Klärschlammtrocknungseinrichtung kann wenigstens eine Wärmetauschereinrichtung vorgesehen sein, mittels der die Niedertemperatur-Abwärme des über die wenigstens eine Niedertemperatur-Vorlaufleitung zugeführten Niedertemperatur-Wärmestromes einen Luftstrom zur Erzeugung eines Warmluftstromes erhitzt. Der Warmluftstrom entzieht dem auf einem Trocknungsband gleichmäßig verteilten Klärschlamm dann die Feuchtigkeit. Die Trocknungsabluft aus der Klärschlammtrocknungseinrichtung, die in etwa eine Temperatur von 20°C bis 70°C aufweist, kann dann wiederum der Biomassefeuerung zugeführt werden, was den Gesamtwirkungsgrad der Anlage erhöht. Die Trocknungsabluft kann über einen Wärmetauscher geführt werden, der weiterhin von Rauchgas durchströmt wird, wodurch die Trocknungsabluft auf ca. 50°C bis 100°C erwärmt wird.

Die Trocknungsabluft weist bei der angegebenen Temperatur von 20°C bis 70°C ein solch großes Volumen auf, dass nur ein verhältnismäßig kleiner Anteil davon der Biomassefeuerung zugeführt werden kann, weil diese viel weniger Luft für die Verbrennung benötigt, als Trocknungsabluft entsteht. Ein großer Teil der in der Trocknungsabluft enthaltenen Energie geht bei diesem Verfahren verloren.

Die EP 1 621 523 A1 offenbart ein Trocknungsverfahren, bei welchem Schlamm auf einen beheizten Boden einer Trocknungshalle zum Trocknen aufgebracht wird. Dabei wird aus der Trocknungshalle abgesaugter Luft Wärme über einen Luft/Wasser-Wärmetauscher entzogen und einer Wärmepumpe zugeführt, welche über einen weiteren Wärmetauscher eine Flüssigkeit erwärmt, die zum Beheizen des Bodens der Trocknungshalle und zum Beheizen eines weiteren Wasser/Luft-Wärmetauschers für in die Trocknungshalle einströmende Luft dient. Die Wärmepumpe kann das Temperaturniveau von beim Wasser einer Kläranlage üblicherweise vorliegenden Temperaturniveau von 8°C bis 15°C auf einen Bereich des den Boden der Trocknungshalle heizenden Wassers von 50°C bis 60°C anheben. In dem von der Luft aus der Trocknungshalle durchströmten Wärmetauscher kann das Temperaturniveau auf 20°C bis 30°C angehoben werden. Bei einer Ausgestaltung des Verfahrens ist der Boden der Trocknungshalle in verschiedene Trocknungszonen unterteilt, die der Schlamm bei seiner Trocknung durchwandert, nämlich eine Ladezone, eine Drainagezone, eine Trocknungszone, eine Fertigtrocknungszone und eine Austragungszone mit einer Förderanlage.

Die Aufgabe der vorliegenden Erfindung ist es, ein alternatives, einfach durchzuführendes, wenig störanfälliges und energieeffizientes Verfahren zum Trocknen von Schlamm sowie eine zur Durchführung des Verfahrens geeignete Vorrichtung anzugeben.

Die Aufgabe wird durch ein Verfahren gemäß Anspruch 1 und eine Vorrichtung gemäß Anspruch 14 gelöst. Zweckmäßige Ausgestaltungen ergeben sich aus den Merkmalen der Ansprüche 2 bis 13 sowie 15.

Erfindungsgemäß ist ein Verfahren zum Trocknen von Schlamm mit folgenden Schritten vorgesehen:
a) Aufbringen eines einen Trockensubstanzgehalt von 15% bis 30% aufweisenden Schlamms auf einen Boden einer Trocknungshalle oder dort bereits vorhandenen Schlamm,
b) Vortrocknen des Schlamms in der Trocknungshalle (10), wobei der Schlamm, insbesondere stetig, durchmischt wird,
c) Einbringen zumindest eines Teils des vorgetrockneten Schlamms in einen beheizten thermischen Trockner, wobei der jeweils in den thermischen Trockner eingebrachte Schlamm in der Trocknungshalle durch Durchführung des Schritts a) durch einen einen Trockensubstanzgehalt von 15% bis 30% aufweisenden Schlamm ersetzt wird, der dann ebenfalls Schritt b) durchläuft,
d) Trocknen des Schlamms im thermischen Trockner bis zu einem Trockensubstanzgehalt von 80% bis 95%, wobei der Schlamm von Feuchtigkeit aus dem Schlamm aufnehmender Luft überströmt oder durchströmt wird, wobei die Luft auf eine Temperatur in einem Bereich von 70°C bis 160°C gebracht wird, oder wobei durch Erwärmen des Schlamms Wasserdampf aus dem Schlamm freigesetzt wird, wobei der Schlamm nach Erreichen des Trockensubstanzgehalt von 80% bis 95% aus dem thermischen Trockner ausgebracht wird, wobei der aus dem thermischen Trockner jeweils ausgebrachte Schlamm im thermischen Trockner durch Durchführung des Schritts c) durch vorgetrockneten Schlamm ersetzt wird, der dann ebenfalls Schritt d) durchläuft,
e) Hindurchleiten der bei Schritt d) erwärmten Luft oder des Wasserdampfs durch einen ersten Bereich eines Wärmetauschers, der in einem zweiten Bereich von Umgebungsluft durchströmt wird, wobei die bei Schritt d) erwärmte Luft oder der Wasserdampf unter Kondensation der darin enthaltenen Feuchtigkeit Wärme an die Umgebungsluft abgibt, wobei die erwärmte Luft oder der Wasserdampf auf eine Temperatur im Bereich von 10°C bis 60°C abgekühlt und die Umgebungsluft auf eine höchstens 40 K über der Umgebungstemperatur liegende Temperatur von höchstens 50°C erwärmt wird und
f) Fördern des Vortrocknens gemäß Schritt b) durch Einleiten der bei Schritt e) erwärmten Umgebungsluft in die Trocknungshalle, so dass die Umgebungsluft auf oder über die Oberfläche des auf den Boden der Trocknungshalle aufgebrachten Schlamms strömt,
wobei eine Erhöhung oder Erniedrigung des Drucks der Luft, des Wasserdampfs oder der Umgebungsluft beim gesamten Verfahren ausschließlich dem Befördern der Luft, des Wasserdampfs oder der Umgebungsluft dient. Eine konstruktiv aufwändige Bereitstellung eines Niederdrucks bzw. einer Vakuumbeaufschlagung, wie sie aus der DE 196 44 465 C2 bekannt ist, entfällt beim erfindungsgemäßen Verfahren.

Schlamm mit einem Trockensubstanzgehalt von 15% bis 30% kann beispielsweise durch mechanisches Entwässern von Schlamm mit einem niedrigeren Trockensubstanzgehalt erreicht werden. Das mechanische Entwässern kann entweder im Bereich oder in unmittelbarer Nähe der Trocknungshalle oder im Bereich oder in unmittelbarer Nähe eines Klärwerks erfolgen. Der Transport von bei einem Klärwerk entwässertem Klärschlamm zur Trocknungshalle kann z. B. mittels eines Lastkraftwagens erfolgen. Das mechanische Entwässern kann beispielsweise mittels einer Zentrifuge oder mittels Abpressen des Wassers vom Schlamm erfolgen.

Unter einer Trocknungshalle wird hier eine eingehauste Fläche verstanden, wobei die Fläche den Boden der Trocknungshalle bildet. Es kann sich bei der Trocknungshalle um eine klassische Halle handeln, die beispielsweise mit einem Radlader befahren werden kann, oder auch um eine Fläche, die von einer niedrigeren, z. B. nur maximal 1,5 m hohen, Gebäudehülle eingehaust ist.

Bei dem thermischen Trockner handelt es sich um einen Trockner, der durch Zuführen von Energie beheizt wird. Beispielsweise kann das Beheizen mittels der Abwärme eines Blockheizkraftwerks, durch Verbrennen fossiler Brennstoffe oder mittels Strom erfolgen. Der bei Schritt d) aus dem Schlamm freigesetzte Wasserdampf weist eine Temperatur von 100°C bis 160°C auf. Er kann insbesondere eine Temperatur von 100°C bis 150°C, insbesondere 100°C bis 140°C, insbesondere 100°C bis 135°C, insbesondere 100°C bis 130°C, aufweisen. Die Luft wird bei Schritt d) im thermischen Trockner im Allgemeinen in einem Kreislauf geführt. Von diesem Kreislauf wird im thermischen Trockner bei Schritt e) ein Teil der erwärmten und durch den Schlamm befeuchteten Luft nach dem Überströmen oder durchströmen des Schlamms, beispielsweise 10 bis 20% des zirkulierenden Luftvolumens, abgezweigt und durch, insbesondere vorgewärmte, Umgebungsluft ersetzt. Die abgezweigte Luft wird bei Schritt e) durch den ersten Bereich des Wärmetauschers geleitet. Nach und nach wird so zumindest weitgehend die gesamte bei Schritt d) erwärmte Luft durch den ersten Bereich des Wärmetauschers geleitet.

Ein großer Vorteil des erfindungsgemäßen Verfahrens besteht darin, dass es mit verhältnismäßig geringem konstruktiven Aufwand einen ununterbrochenen Betrieb des thermischen Trockners erlaubt und die mehrfache Nutzung eines verhältnismäßig hohen Anteils der für den thermischen Trockner eingesetzten Energie ermöglicht. Die Trocknung in der Trocknungshalle erfolgt bei verhältnismäßig niedriger Temperatur. Diese Trocknung wird beim erfindungsgemäßen Verfahren bereits durch eine verhältnismäßig geringfügige Erwärmung der Umgebungsluft bei Schritt e) auf eine Temperatur von höchstens 50°C, wobei die Temperatur nur höchstens 40 K über der Umgebungstemperatur liegt, unterstützt. Die Umgebungstemperatur ist dabei im Allgemeinen die Temperatur in der Umgebung und die Umgebungsluft Luft aus der Umgebung der Trocknungshalle und eines den thermischen Trockner umgebenden Gebäudes. Als Umgebung kann ein Bereich von 0 m bis 100 m, insbesondere 0 m bis 50 m, Abstand von der Trocknungshalle oder dem den thermischen Trockner umgebenden Gebäude verstanden werden. Eine sinnvolle Durchführung des erfindungsmäßigen Verfahrens ist bei einer Umgebungstemperatur von -30°C bis +40°C, insbesondere -30°C bis +30°C, möglich.

Durch die verhältnismäßig niedrige Temperatur von 10°C bis 60°C, auf welche die Luft oder der Wasserdampf aus dem thermischen Trockner abgekühlt wird, wird trotz des niedrigen Temperaturniveaus eine verhältnismäßig große Menge an Kondensationsenergie auf die Umgebungsluft übertragen. Dadurch wird eine hohe Wärmerückgewinnungsquote erreicht, die um so größer ist je niedriger die Temperatur der Umgebungsluft ist. Daher ist die Durchführung des erfindungsgemäßen Verfahrens mit Umgebungsluft im Winter besonders energieeffizient. Eine Nutzung der Kondensationsenergie der erwärmten Luft oder des Wasserdampfs aus dem thermischen Trockner findet bei dem aus der DE 10 2004 051 975 B3 bekannten Verfahren nicht statt. Soweit diese Trocknungsabluft über einen Wärmetauscher geführt wird, dient dieser dazu, die Trocknungsabluft auf 50 bis 100°C mittels Rauchgas zu erwärmen, aber nicht dazu, die Trocknungsabluft weiter abzukühlen. Durch die beim Abkühlen erfolgende Kondensation in der Luft oder im Wasserdampf erfolgt außerdem ein Abscheiden von aus dem thermischen Trockner mitgeführten Staub, so dass die Luft oder der Wasserdampf dann direkt ohne weitere Staubabschneidung einem Biofilter zugeführt werden kann, ohne dass dieser von Staub zugesetzt wird.

Die Kombination der thermischen Trocknung mit einer Vortrocknung auf einer verhältnismäßig großen Fläche in Form des Bodens der Trocknungshalle bei einer Temperatur, die nur höchstens 40 K über der Umgebungstemperatur liegt, ermöglicht eine sinnvolle Nutzung eines verhältnismäßig niedrigen Temperaturniveaus im Wärmetauscher. Der Wärmetauscher kann dadurch auch in einem niedrigen Temperaturbereich noch sinnvoll betrieben werden, indem ein Betrieb des aus der WO 2007/147181 A1 bekannten Wärmetauschers nicht mehr sinnvoll ist, weil bei diesem Temperaturniveau eine bloße Niedertemperaturtrocknung ohne Nutzung der verhältnismäßig großen Fläche nicht kosteneffizient ist. Durch die Kombination des thermischen Trockners mit einer Trocknung in einer Trockenhalle entsteht ein synergistischer Effekt, der die Nutzung eines größeren Anteils der im thermischen Trockner eingesetzten Energie als das aus der WO 2007/147181 A1 bekannte Verfahren ermöglicht, weil beim erfindungsgemäßen Verfahren die im thermischen Trockner erwärmte Luft auf ein niedrigeres Temperaturniveau abgekühlt wird. Durch die Kombination kann ein größerer Anteil der im thermischen Trockner eingesetzten Energie zur Trocknung genutzt werden, als bei anderen bekannten Verfahren.

Bei dem erfindungsgemäßen Verfahren handelt es sich ebenso wie bei dem aus der DE 10 2004 051 975 B3 bekannten Verfahren um eine Niedertemperaturtrocknung, die jedoch im Gegensatz zu dem bekannten Verfahren einen großen Anteil der im thermischen Trockner eingesetzten Energie effizient für eine Vortrocknung nutzt. Es können bis zu etwa 70% der für den thermischen Trockner eingesetzten Energie zur Unterstützung der Trocknung in der Trockenhalle genutzt werden. Der spezifische Energiebedarf für die Durchführung des erfindungsgemäßen Verfahrens ist etwa 30 bis 70 % niedriger, als der spezifische Energiebedarf für die Durchführung eines klassischen thermischen Trocknungsverfahrens.

Im Gegensatz zu dem aus der DE 196 44 465 C2 bekannten Verfahren ist beim erfindungsgemäßen Verfahren weder der Aufbau eines Vakuums noch ein Verdichten zur Kondensation der Feuchtigkeit erforderlich. Beim erfindungsgemäßen Verfahren erfolgt die Kondensation nur durch Abkühlung der Feuchtigkeit enthaltenden Luft oder des Wasserdampfs im Wärmetauscher, der dabei auch als Kondensator wirkt. Bei der den zweiten Bereich des Wärmetauschers durchströmenden Umgebungsluft handelt es sich um Luft von außerhalb der Trocknungshalle und außerhalb des thermischen Trockners. Durch dieses Verfahren kann sowohl die durch Kondensation freigesetzte Wärme als auch die sensible Wärme der Feuchtigkeit enthaltenden Luft oder des Wasserdampfs aus dem thermischen Trockner genutzt werden, ohne dass dazu ein hohes Temperaturniveau oder ein hoher apparativer Aufwand erforderlich ist. In Kombination mit der bei verhältnismäßig niedriger Temperatur erfolgenden Trocknung in der Trocknungshalle, bei welcher der Schlamm eine verhältnismüßig große Oberfläche aufweist, reicht bereits eine Erwärmung der Umgebungsluft um wenige Grad Celsius aus, um eine Trocknungswirkung zu erreichen und die Energie sinnvoll nutzen zu können.

Ein weiterer Vorteil des erfindungsgemäßen Verfahrens besteht in einer teilweisen Selbstregulierung. Wenn beispielsweise der Trockensubstanzgehalt des gemäß Schritt b) vorgetrockneten Schlamms sinkt, muss der nachgeschaltete thermische Trockner mehr Wasser verdampfen und braucht mehr Energie. Dadurch nimmt die bei Schritt d) den Schlamm im thermischen Trockner überströmende oder durchströmende Luft auch mehr Energie auf und gibt diese im Wärmetauscher ab. Dadurch wird die Umgebungsluft im zweiten Bereich des Wärmetauschers um einen höheren Betrag erwärmt oder es wird eine größere Menge der Umgebungsluft erwärmt. In beiden Fällen bewirkt dies ein Ansteigen des Trockensubstangehalts des gemäß Schritt b) vorgetrockneten Schlamms bis sich ein Gleichgewicht einstellt.

Mit besonders geringem technischen Aufwand kann die Energie aus dem thermischen Trockner genutzt werden, wenn die im thermischen Trockner erwärmte Luft oder der Wasserdampf Wärme an die Umgebungsluft abgibt. Ein weiterer Vorteil der Übertragung an Umgebungsluft besteht darin, dass bei sinkender Umgebungstemperatur, beispielsweise im Winter, die aus dem thermischen Trockner stammende erwärmte Luft oder der Wasserdampf im ersten Bereich des Wärmetauschers weiter abgekühlt wird als bei höherer Umgebungstemperatur, weil die Umgebungsluft nur um wenige K über die Umgebungstemperatur erwärmt werden muss, um zum Fördern des Vortrocknens geeignet zu sein. Dadurch kann ein größerer Anteil der in der erwärmten Luft enthaltenen Feuchtigkeit im Wärmetauschen kondensiert und damit mehr Kondensationswärme genutzt werden. Dadurch steigt die Wärmerückgewinnungsquote.

Damit am Ende des Trocknungsvorgangs der gewünschte Trockensubstanzgehalt erreicht wird, kann der Trockensubstanzgehalt des aus dem thermischen Trockner ausgebrachten Schlamms gemessen werden. Je nach Bedarf kann dann dem thermischen Trockner mehr oder weniger Energie zugeführt werden. Falls der thermische Trockner als Bandtrockner ausgebildet ist, kann auch der Bandvorlauf reduziert werden, so dass der Schlamm für eine längere Zeit in dem thermischen Trockner verbleibt, sofern dem Trockner nicht noch mehr Energie zugeführt werden kann und der gewünschte Trockensubstanzgehalt noch nicht erreicht ist. Sofern der thermische Trockner mit Abwärme, beispielsweise eines Blockheizkraftwerks, betrieben wird, kann notfalls auch eine zusätzliche Heizvorrichtung zur Abdeckung von Spitzenlasten zugeschaltet werden.

Die Kombination der Vortrocknung des Schlamms auf dem Boden der Trocknungshalle mit der Trocknung in einem herkömmlichen thermischen Trockner bietet auch im Hinblick auf einen störungsfreien und insbesondere automatisierten Betrieb große Vorteile. Wenn die zu trocknenden Schlämme in Form von Klärschlamm aus unterschiedlichen Kläranlagen stammen, können die Schlämme einen stark unterschiedlichen Trockensubstanzgehalt aufweisen. Der durch mechanische Entwässerung erreichbare Trockensubstanzgehalt ist ebenfalls unterschiedlich. Er hängt ab von der Schlammzusammensetzung, der Abwasserreinigungstechnik, dem Verfahren zur mechanischen Entwässerung und der Temperatur, mit der Abwasser anfällt und eine Kläranlage betrieben wird. Je geringer diese Temperatur ist, desto schlechter lässt sich der Schlamm im Allgemeinen entwässern, weil umso weniger organische Bestandteile des Abwassers in der Kläranlage umgesetzt werden, je niedriger die Temperatur ist.

Schlämme, die mit schwankenden Trockensubstanzgehalten anfallen, sind aus technischen und ökonomischen Gründen in einem herkömmlichen thermischen Trockner nur schwer zu handhaben. Dazu müsste beim Betrieb jeweils der Eingangstrockensubstanzgehalt bestimmt und in Abhängigkeit davon die Parameter festgelegt werden, mit der der thermische Trockner betrieben wird. Dies ist in der Praxis jedoch kaum oder nur mit hohem Aufwand, beispielsweise durch Bereitstellen einer Fachkraft, die subjektiv den Eingangstrockensubstanzgehalt abschätzt und den thermischen Trockner regelt, zu gewährleisten. Durch das Vortrocknen in der Trocknungshalle kann jedoch erreicht werden, dass dem thermischen Trockner stets Schlamm mit relativ gleichbleibendem Trockensubstanzgehalt zugeführt wird. Im Wesentlichen wird dies dadurch erreicht, dass die Trocknungshalle als Puffer wirkt, in dem durch das Durchmischen des Schlamms der Trockensubstanzgehalt des Schlamms vergleichmäßigt wird. Dadurch kann mittels des erfindungsgemäßen Verfahrens auch mit stark schwankendem Trockensubstanzgehalt in die Trocknungshalle eingebrachter Schlamm problemlos gehandhabt werden, ohne dass dadurch Störungen auftreten, wie dies beispielsweise bei dem aus der WO 2007/147181 A1 bekannten Verfahren anzunehmen ist. Durch die Vergleichmäßigung des Trockensubstanzgehalts beim Vortrocknen und die Möglichkeit mit unterschiedlichen Eingangstrockensubstanzgehalten des Schlamms im Bereich von 15% bis 30% zu arbeiten, kann mit dem erfindungsgemäßen Verfahren ganzjährig witterungsunabhängig getrocknet und Schlamm mit einem Trockensubstanzgehalt von etwa 90% bereitgestellt werden.

Ein weiterer mit dem Vortrocknen auf dem Boden der Trocknungshalle einhergehender Vorteil im Hinblick auf einen störungsfreien Betrieb besteht darin, dass sich beim Aufbringen des Schlamms auf dem Boden große Fremdkörper oder Störstoffe leicht erkennen und beseitigen lassen. Dies ist insbesondere dann von Vorteil, wenn das erfindungsgemäße Verfahren zentral für mehrere Kläranlagen durchgeführt wird und der zu trocknende Schlamm mit Lastkraftwagen zu der Trocknungshalle gebracht wird, weil Fremdkörper oder Störstoffe auf den Ladeflächen der Lastkraftwagen aus vorhergehenden Nutzungen immer wieder in den Schlamm geraten.

Die Zuverlässigkeit des Verfahrens kann dadurch gesteigert werden, dass der Schlamm durch die Vortrocknung soweit getrocknet wird, dass er rieselfähig ist. Dadurch kann der Schlamm zwischen den Schritten b) und c) zur Absonderung von Fremdkörpern oder Störstoffen durch ein, insbesondere grobmaschiges, Gitter gesiebt werden. Die Störanfälligkeit des Verfahrens kann dadurch mit geringem Aufwand erheblich verringert werden.

Das Aufbringen auf dem Boden kann beispielsweise mittels eines Radladers erfolgen. Um eine gute Zugänglichkeit, beispielsweise zur Beseitigung von Fremdkörpern oder Störstoffen, zu erreichen, kann der Schlamm auf dem Boden in einer sehr dünnen Schicht, beispielsweise von 5 bis 20 cm Dicke aufgetragen werden. Ein häufig auftretendes Problem bei thermischen Trocknern besteht darin, dass der Schlamm vor dem Trocknen im thermischen Trockner in einem Bunker zwischengelagert wird, an dessen Boden sich eine Zuführeinrichtung zum Zuführen des Schlamms zum thermischen Trockner, beispielsweise in Form einer Förderschnecke oder eines Schubbodens, angeordnet ist. Die Zuführeinrichtung kann durch Fremdkörper oder Störstoffe leicht blockiert und dadurch ein Stillstand der Anlage bewirkt werden. Im Fall eines Bunkers zur Zwischenlagerung des Schlamms ist dieser oft bis zu einer Höhe von 2 bis 3 Metern mit Schlamm gefüllt. Dieser Schlamm muss im Falle eines Blockieren der Zuführeinrichtung aus dem Bunker ausgebaggert und zwischengelagert werden, um die Störung zu beseitigen.

Selbst wenn die Störung nicht zu einer Blockade der Zuführeinrichtung führt, können die Fremdkörper oder Störstoffe den thermischen Trockner beschädigen. Insbesondere wenn der thermische Trockner als Bandtrockner ausgebildet ist, können scharfkantige Fremdkörper oder Störstoffe leicht zu einer Beschädigung des Förderbands führen. Durch die leichte Erkennbarkeit, gute Zugänglichkeit und leichte Entfernbarkeit von Störstoffen oder Fremdkörpern während des Vortrocknens in der Trocknungshalle wird dieser Nachteil beim erfindungsgemäßen Verfahren beseitigt. Im Gegensatz zu einem ausschließlich mittels einstrahlender Sonnenstrahlung betriebenen Trockner ist der Flächenbedarf für einen nach dem erfindungsgemäßen Verfahren betriebenen Trockner erheblich geringer.

Bei üblichen thermischen Trocknern besteht eine Problematik darin, dass der Gesamtkohlenstoffgehalt der Abluft verhältnismäßig hoch ist und damit beispielsweise häufig gegen Vorschriften der Deutschen Bundesemissionsschutzverordnung verstoßen wird. Durch das Vortrocknen wird der Schlamm jedoch vor dem Eintritt in den thermischen Trockner in einen stabilen aeroben Zustand versetzt, wodurch die Ausgasung von Methan vermieden oder zumindest deutlich reduziert wird.

Bei einer Ausgestaltung des erfindungsgemäßen Verfahrens weist die Trocknungshalle eine Vorrichtung zur Lufterwärmung mittels Sonnenstrahlung, insbesondere einen als Luftkollektor ausgebildeten Sonnenkollektor, auf. Alternativ kann die Trocknungshalle gewächshausartig ausgebildet sein und eine im Wesentlichen transparente Gebäudehülle aufweisen. Das Vortrocknen des Schlamms erfolgt dann unter Ausnutzung von in den Luftkollektor oder in die Trocknungshalle einstrahlender Sonnenstrahlung. Durch die Ausnutzung der Sonnenstrahlung wird die Trocknung in der Trocknungshalle weiter unterstützt. Dadurch ist das Fördern des Vortrocknens durch Einleiten der bei Schritt e) erwärmten Umgebungsluft gemäß Schritt f) mit einer noch geringeren Wärmezufuhr möglich als ohne Ausnutzung der einstrahlenden Sonnenstrahlung. Dadurch wird der ohnehin schon durch die Kombination des thermischen Trockners mit der Trocknungshalle bestehende synergistische Effekt noch verstärkt und der spezifische Energiebedarf weiter verringert.

Das erfindungsgemäße Verfahren kann so ausgestaltet sein, dass die Umgebungsluft bei Durchführung des Schritts e) auf eine Temperatur von weniger als 50°C, insbesondere weniger als 40°C, insbesondere weniger als 35°C, insbesondere höchstens 30°C, erwärmt wird. Bei Durchführung des Schritts e) kann die Temperatur höchstens 30 K, insbesondere höchstens 20 K, insbesondere höchstens 10 K, über der Umgebungstemperatur liegen. Das bei Durchführung des Schritts e) entstehende Kondensat kann eine Temperatur von höchstens 60°C, insbesondere höchstens 50°C, insbesondere höchstens 45°C, insbesondere höchstens 35°C, aufweisen. Durch dieses niedrige Temperaturniveau des Kondensats und damit auch des Wärmetauschers bzw. des Kondensators ist eine gute Ausnutzung der bei der Kondensation freiwerdenden Wärme gewährleistet. Je tiefer die Temperatur des Wärmetauschers bzw. des Kondensators ist, desto mehr Kondensationswärme kann genutzt werden. Dieser Vorteil kommt insbesondere bei Durchführung des erfindungsgemäßen Verfahrens mit Umgebungsluft im Winter zur Geltung.

Bei einer Ausgestaltung des erfindungsgemäßen Verfahrens wird der Schlamm bei Durchführung des Schritts c) und/oder des Schritts d) auf einem, insbesondere luftdurchlässigen, Förderband bewegt. Bei dem thermischen Trockner handelt es sich dabei um einen sogenannten Bandtrockner. Das erleichtert einen vollständig automatisierten Betrieb. Beispielsweise kann durch die Geschwindigkeit, mit der das Förderband den Schlamm durch den thermischen Trockner bewegt, die Verweildauer des Schlamms im thermischen Trockner und damit der in dem thermischen Trockner erreichbare Trockensubstanzgehalt reguliert werden.

Bei einer weiteren Ausgestaltung des erfindungsgemäßen Verfahrens wird der Schlamm bei Durchführung des Schritts d) von oben nach unten von Luft durchströmt. Das Durchströmen des Schlamms ist effizienter als ein bloßes Überströmen des Schlamms mit Luft. Ein Durchströmen von oben nach unten hat gegenüber einem Durchströmen von unten nach oben den Vorteil, dass dadurch keine Partikel des Schlamms herumgewirbelt werden, weil lose Partikel dadurch allenfalls auf die Unterlage gedrückt werden. Wird der Schlamm dabei auf einem Förderband bewegt, weist das Förderband zur Gewährleistung der Durchströmbarkeit kleine Öffnungen oder Poren auf.

Bei dem Schlamm kann es sich um, insbesondere mechanisch entwässerten, Klärschlamm handeln.

Bei der Kondensation gemäß Schritt e) entstehendes Kondensat kann zum Erwärmen des Bodens der Trocknungshalle verwendet werden. Dazu kann der Boden der Trocknungshalle von einer Flüssigkeitsleitung durchzogen sein, durch die das Kondensat geleitet wird. Alternativ oder zusätzlich kann das bei der Kondensation gemäß Schritt e) entstehende Kondensat zum Befeuchten eines biologischen Filters zur Reinigung von bei dem Verfahren entstehender Abluft und/oder zum Befeuchten von Abluft aus der Trocknungshalle verwendet werden. Biologische Filter bestehen üblicherweise aus einem biologischen Trägermaterial, auf dem Mikroorganismen leben. Damit das Trägermaterial nicht austrocknet, ist ein stetiges Befeuchten notwendig. Durch das Verwenden des bei Schritt e) entstehenden Kondensats ist es möglich, das Verfahren so zu betreiben, dass kein oder nur sehr wenig Abwasser entsteht und gleichzeitig kein zusätzliches Wasser zur Befeuchtung des biologischen Filters notwendig ist. Ein abwasserfreies Verfahren ist insbesondere dann von Vorteil, wenn keine Kläranlage zur Aufnahme des Abwassers zur Verfügung steht. Das Befeuchten des biologischen Filters kann beispielsweise dadurch erfolgen, dass dieser mit dem gemäß Schritt e) entstehenden Kondensat besprüht wird. Um die in dem biologischen Filter lebenden Mikroorganismen oder beim Befeuchten der Abluft ein die Abluft kontaktierendes Material oder die Umwelt oder beim Erwärmen des Bodens der Trocknungshalle die Flüssigkeitsleitungen zu schonen, kann der pH-Wert des Kondensats durch Zusatz einer Säure zum Kondensat abgesenkt werden. Das Kondensat weist ansonsten, insbesondere durch darin enthaltene Ammoniumionen, häufig einen sehr hohen pH-Wert auf.

Bei einer weiteren Ausgestaltung des erfindungsgemäßen Verfahrens sind die Trocknungshalle und der thermische Trockner Bestandteile eines Gebäudes oder weniger als 20 m, insbesondere weniger als 10 m, voneinander beabstandet. Dadurch lassen sich die thermischen Verluste zwischen Trocknungshalle und Trockner minimieren. Eine weitere Nutzung von beim Betrieb des thermischen Trockners anfallender Wärme ist dadurch möglich, dass den thermischen Trockner direkt umgebende und vom thermischen Trockner erwärmte weitere Luft, z. B. aus einem den thermischen Trockner umgebenden Gebäude, ebenfalls in die Trocknungshalle eingeleitet wird, so dass diese auf oder über die Oberfläche des auf den Boden der Trocknungshalle aufgebrachten Schlamms strömt. Da thermische Trockner stets die sie umgebende Luft erwärmen, kann so die ansonsten ungenutzt verlorengehende Wärme zur Trocknung des Schlamms genutzt werden.

Bei einer weiteren Ausgestaltung des erfindungsgemäßen Verfahrens dient die Trocknungshalle auch zur Annahme und Lagerung von einen Trockensubstanzgehalt von 15% bis 30% aufweisendem und/oder zur Lagerung von gemäß Schritt b) vorgetrocknetem Schlamm. Dabei kann es sich um Schlamm handeln, der, z. B. wegen unzureichender Kapazität des thermischen Trockners oder wegen Wartungsarbeiten am thermischen Trockner, nicht sofort in der Trocknungshalle vorgetrocknet oder im thermischen Trockner getrocknet werden kann. Dadurch dient die Trocknungshalle als Puffer für den vom thermischen Trockner zu trocknenden Schlamm. Dies ist auch vorteilhaft, weil die Kosteneffizienz des thermischen Trockners dann besonders groß ist, wenn dieser mit einer relativ gleichbleibenden Menge an Schlamm pro Zeiteinheit betrieben wird. Dies ist insbesondere bei einem Betrieb einer herkömmlichen thermischen Trocknungsvorrichtung, die von mehreren Kläranlagen mit Schlamm beliefert wird, ohne eine Zwischenlagerung kaum zu gewährleisten, weil der zu trocknende Schlamm meist nicht in gleichbleibender Menge pro Zeiteinheit anfällt. Ursache dafür können logistische Probleme, Feiertage und Störungen, z. B. beim Betrieb einer zuliefernden Kläranlage, sein. Außerdem kann eine Lagerung erforderlich sein, wenn Wartungsarbeiten am thermischen Trockner durchzuführen sind. Zur Schlammannahme und -lagerung ist daher üblicherweise sowieso ein möglichst großer Lagerplatz oder Bunker erforderlich. Der durch die Trocknungshalle zusätzlich entstehende Platzbedarf ist daher gering, wenn die Trocknungshalle auch zur Annahme und Lagerung des Schlamms verwendet wird und dafür kein gesonderter Lagerplatz vorgesehen wird. Häufig auftretende logistische Probleme bei der Schlammannahme können dadurch vermieden werden ohne zusätzlich eine Schlammannahmeeinrichtung vorsehen zu müssen.

Das erfindungsgemäße Verfahren hat sich als besonders energieeffizient erwiesen, wenn der Schlamm beim Vortrocknen auf eine Maximaltemperatur von weniger als 50°C, insbesondere eine Maximaltemperatur von 20°C bis 40°C, erwärmt wird.

Bei Durchführung des Schritts b) kann der Schlamm bis zu einem Trockensubstanzgehalt von 25% bis 70%, insbesondere 40% bis 60%, insbesondere 50% bis 60%, vorgetrocknet werden. Sofern der Schlamm nach dem Vortrocknen einen Trockensubstanzgehalt unter 50% aufweist, liegt dieser häufig in einer sogenannten Leimphase vor. Diese ist bei der thermischen Trocknung nur schwer zu handhaben, weil ein derartiger Schlamm an ihn kontaktierenden Oberflächen, beispielsweise in Form des Bandes eines Bandtrockners, klebt. Um dies zu umgehen, wird Schlamm in der Leimphase häufig vor dem Einbringen in einen thermischen Trockner mit bereits getrocknetem Schlamm mit einem höheren Trockensubstanzgehalt vermischt und erst dann in den thermischen Trockner einbracht. Je weiter der Trockensubstanzgehalt unterhalb von 50% liegt, desto größer ist die Menge von beizumischendem bereits getrocknetem Schlamm und desto größer ist damit auch die Menge an Schlamm, die mehrfach durch den thermischen Trockner geführt wird. Dies bewirkt zusätzliche Kosten und einen erhöhten Verschleiß der zu Durchführung des Verfahrens verwendeten Vorrichtung. Beim erfindungsgemäßen Verfahren und einer Vortrocknung des Schlamms bis zu einem Trockensubstanzgehalt von mindestens 30% muss wesentlich weniger getrockneter Schlamm zur Vermeidung der Leimphase beigemischt werden, als dies im Stand der Technik üblich ist. Dadurch verringert sich die Menge des mehrfach den thermischen Trockner passierenden Schlamms, der Energieaufwand für die Trocknung und der Verschleiß der zur Durchführung des Verfahrens eingesetzten Vorrichtung.

Bei einer besonders energieeffizienten Durchführung des erfindungsgemäßen Verfahrens wird die Luft bei Durchführung des Schritts d) auf eine Temperatur in einem Bereich von 90°C bis 150°C, insbesondere 90°C bis 130°C, insbesondere 90°C bis 110°C, gebracht. Bei Durchführung des Schritts e) kann die Luft oder der Wasserdampf auf eine Temperatur im Bereich von 10°C bis 50°C, insbesondere 10°C bis 40°C, abgekühlt werden. Je weiter die Luft oder der Wasserdampf abgekühlt wird, desto mehr Kondensationsenergie wird in Form von Wärme an die Umgebungsluft abgegeben und desto mehr Energie wird zurückgewonnen.

Wenn die Luft oder der Wasserdampf bei Durchführung des Schritts e) auf eine Temperatur im Bereich von 25°C bis 40°C abgekühlt wird, kann die Luft oder der Wasserdampf danach direkt durch einen bzw. den biologischen Filter geleitet werden. Bei dieser Temperatur arbeitet der biologische Filter besonders effizient und die darin enthaltenen Mikroorganismen nehmen keinen Schaden.

Eine weitere Steigerung der Energieeffizienz des erfindungsgemäßen Verfahrens ist möglich, indem nach Durchführung des Schritts d) Umgebungsluft zur Kühlung des ausgebrachten Schlamms, insbesondere auf eine Temperatur, die höchstens 25 K, insbesondere höchstens 20 K, über der Umgebungstemperatur liegt, verwendet wird und die dadurch erwärmte Umgebungsluft ebenfalls in die Trocknungshalle eingeleitet wird, so dass die erwärmte Umgebungsluft auf oder über die Oberfläche des auf den Boden der Trocknungshalle aufgebrachten Schlamms strömt.

Weiterhin kann ein Teil des gemäß Schritt d) ausgebrachten Schlamms zwischen den Schritten b) und c) mit gemäß Schritt b) vorgetrocknetem Schlamm vermischt werden. Dadurch kann die Handhabung von Schlamm verbessert werden, der nach Durchführung des Schritts b) einen Trockensubstanzgehalt von weniger als 50% aufweist und dadurch sehr klebrig ist.

Bei einer Ausgestaltung des erfindungsgemäßen Verfahrens wird aus einer, insbesondere in einer Turbine oder einem sonstigen Verbrennungsmotor, insbesondere in einem Blockheizkraftwerk, erfolgenden Verbrennung resultierendes Abgas der Feuchtigkeit aufnehmenden Luft gemäß Schritt d) zur Erwärmung, insbesondere auf eine Temperatur von 110°C bis 150°C, beigemischt. Dies ermöglicht eine sehr effiziente Nutzung der ansonsten verlorengehenden Wärmeenergie des Abgases. Auch ein zum Kühlen der Turbine oder dem sonstigen Verbrennungsmotor verwendetes Kühlmittel kann in einem weiteren Wärmetauscher zur Vorwärmung der Feuchtigkeit aufnehmenden Luft, insbesondere aus der Umgebung der Trocknungshalle oder des thermischen Trockners, beispielsweise auf eine Temperatur von etwa 80°C, verwendet werden. Dies ermöglicht eine sehr effiziente Nutzung der Abwärme eines Blockheizkraftwerks.

Die Erfindung betrifft weiterhin eine Vorrichtung zur Durchführung eines erfindungsgemäßen Verfahrens, umfassend
- eine Trocknungshalle mit einer Vorrichtung zum, insbesondere stetigen, Durchmischen von auf dem Boden der Trocknungshalle aufgebrachtem Schlamm,
- einen beheizten thermischen Trockner mit einer Bandfördereinrichtung zum kontinuierlichen Transport des Schlamms durch den thermischen Trockner, wobei der thermische Trockner (12) so ausgelegt ist, dass darin der Schlamm von Feuchtigkeit aus dem Schlamm aufnehmender Luft überströmt oder durchströmt werden kann, wobei die Luft auf eine Temperatur in einem Bereich von 70°C bis 160°C gebracht werden kann oder dass durch Erwärmen des Schlamms Wasserdampf mit einer Temperatur von 100°C bis 160°C aus dem Schlamm freigesetzt werden kann,
- einen Wärmetauscher mit einem ersten Bereich und einem zweiten Bereich, wobei ein Wärmeaustausch zwischen dem ersten und dem zweiten Bereich erfolgen kann, eine erste Leitung, die den ersten Bereich dampf- oder luftleitend mit dem thermischen Trockner verbindet, eine zweite Leitung, die den zweiten Bereich mit der Umgebung luftleitend verbindet und eine dritte Leitung, die den zweiten Bereich mit der Trocknungshalle verbindet, und
- mindestens eine Vorrichtung zur Förderung des Dampfs oder der Luft und der Umgebungsluft in der ersten, zweiten und dritten Leitung.

Die Trocknungshalle kann weiterhin eine Vorrichtung zur Lufterwärmung mittels Sonnenstrahlung, insbesondere einen als Luftkollektor ausgebildeten Sonnenkollektor, aufweisen oder gewächshausartig ausgebildet sein und eine im Wesentlichen transparente Gebäudehülle aufweisen. Das Vortrocknen des Schlamms kann dann unter Ausnutzung von in den Luftkollektor oder in die Trocknungshalle einstrahlender Sonnenstrahlung erfolgen.

Die Vorrichtung kann weiterhin ein Blockheizkraftwerk und eine vierte Leitung zur direkten oder indirekten Zuführung des aus dem Betrieb des Blockheizkraftwerks resultierenden Abgases zum thermischen Trockner umfassen. Weiterhin kann die Vorrichtung einen weiteren Wärmetauscher umfassen, der mittels eines Kühlmittels des Blockheizkraftwerks eine Erwärmung von aus der Umgebung der Trocknungshalle oder des thermischen Trockners angesaugter Luft zur Zuführung zum thermischen Trockner erlaubt. Bei der Turbine oder dem sonstigen Verbrennungsmotor kann es sich um eine Gasturbine bzw. einen Gasmotor handeln. Die von dem Gasmotor üblicherweise produzierten Rauchgase weisen eine Temperatur im Bereich von 410°C bis 530°C auf. Durch Beimischung zu der Feuchtigkeit aufnehmenden Luft kann die Luft auf eine Temperatur von 110°C bis 150°C durch das Rauchgas erhitzt werden. Wenn das beigemischte Rauchgas letztendlich die Trocknungshalle verlässt und dabei beispielsweise eine Temperatur von 50°C aufweist, sind im gesamten Verfahren etwa 90% der im Blockheizkraftwerk entstehenden Abwärme verwertet worden. Der Abgasdruck am Gasmotor bzw. der Gasturbine wird vorzugweise so eingestellt, dass keine Vorrichtung zur Förderung des Abgases erforderlich ist.

Ein flüssiges Kühlmittel des Gasmotors kann in dem weiteren Wärmetauscher genutzt werden, um die Feuchtigkeit aufnehmende Luft auf eine Temperatur von beispielsweise etwa 80°C aufzuwärmen.

Nachfolgend wird die Erfindung anhand eines Ausführungsbeispiels und einer Figur näher erläutert.

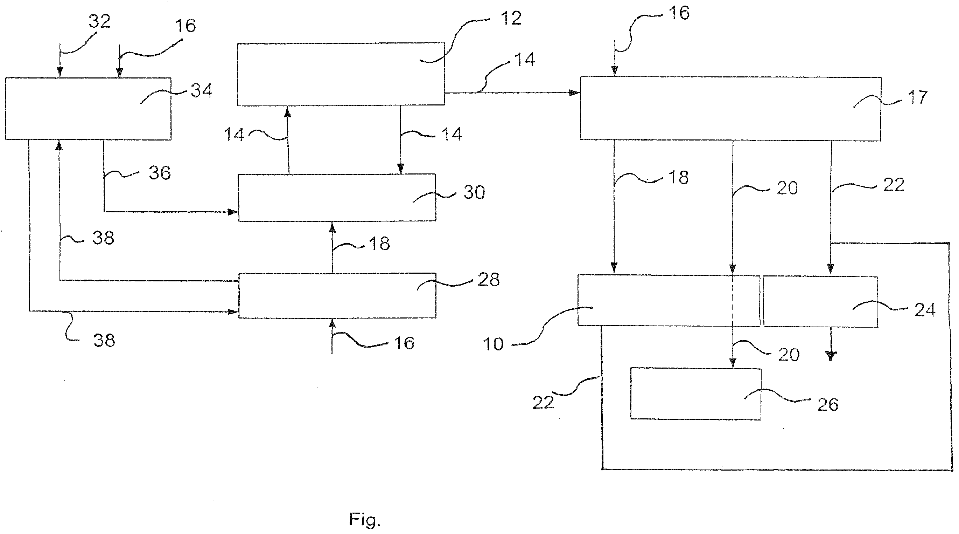

Die einzige Figur zeigt eine schematische Darstellung einer erfindungsgemäßen Trocknungsanlage mit einer gewächshausartigen Trocknungshalle 10 mit einer im Wesentlichen transparenten Gebäudehülle, einem thermischen Trockner 12 und einem mit Brennstoff 32, insbesondere Gas, und Umgebungsluft 16 betriebenen Blockheizkraftwerk 34. Zum Betrieb der Anlage wird zunächst mechanisch entwässerter Schlamm auf den Boden der gewächshausartigen Trocknungshalle 10 aufgebracht und dort unter Ausnutzung von in die Trocknungshalle einstrahlender Sonnenstrahlung vorgetrocknet. Der vorgetrocknete Schlamm wird anschließend in den thermischen Trockner 12 eingebracht, während die dadurch freiwerdende Fläche auf dem Boden der Trocknungshalle wieder mit neuem Schlamm bedeckt wird. Im thermischen Trockner 12 und zwischen dem thermischen Trockner 12 und der Mischvorrichtung 30 zirkuliert Feuchtigkeit aufnehmende Luft 14. Diese Luft wird zum einen durch Zumischen von im Blockheizkraftwerk 34 gebildeten Abgas 36 erwärmt. Gleichzeitig wird Umgebungsluft 16 im weiteren Wärmetauscher 28 von der Kühlflüssigkeit 38 des Blockheizkraftwerks vorgewärmt und die erwärmte Umgebungsluft 18 ebenfalls in der Mischvorrichtung 30 der Luft 14 beigemischt. Die derart erwärmte Luft 14 wird im thermischen Trockner durch den Schlamm geleitet. Von der zirkulierenden Luft 14 wird ein Teil abgezweigt und im Wärmetauscher 17 dazu genutzt, Umgebungsluft 16 vorzuwärmen, die dann als erwärmte Umgebungsluft 18 in die Trocknungshalle 10 und dort auf die Oberfläche des Schlamms geleitet wird. Nach Feuchtigkeitsaufnahme verlässt diese Luft als Abluft 22 die Trocknungshalle 10. Die Abluft 22 kann direkt oder durch den Filter 24 in die Umwelt abgegeben werden. Das im Wärmetauscher 17 gebildete Kondensat 20 wird über eine Abwasserreinigungsvorrichtung 26 entsorgt. Zuvor kann ein Teil der in dem Kondensat 20 enthaltenen Wärme zur Erwärmung des Bodens der Trockenhalle 10 genutzt werden. Ein Teil des Kondensats kann zur Befeuchtung des Filters 24 verwendet werden, wenn dieser als biologischer Filter ausgebildet ist. Durch den Filter 24 wird die Abluft 22 geleitet, welche nach Abscheiden des Kondensats aus der Luft 14 verbleibt.

Das Abgas aus dem Blockheizkraftwerk kann eine Temperatur von 300°C bis 530°C aufweisen. Der Vorlauf der Kühlflüssigkeit 38 aus dem Blockheizkraftwerk 34 kann eine Temperatur von etwa 90°C und der Rücklauf der Kühlflüssigkeit 38 nach Durchlaufen des weiteren Wärmetauschers 28 eine Temperatur von etwa 70°C aufweisen. Die Umgebungsluft 16 kann eine Temperatur zwischen -20°C und +35°C aufweisen. Nach Durchlaufen des weiteren Wärmetauschers 28 kann sie auf eine Temperatur von etwa 60°C bis 80°C erwärmt sein. Im Wärmetauscher 17 erfolgt eine Erwärmung der Umgebungsluft 16 auf etwa 10°C bis 40°C. Das darin gebildete Kondensat kann eine Temperatur zwischen 25°C und 45°C aufweisen. Die Abluft 22 kann eine Temperatur zwischen 25°C und 45°C aufweisen. Die Luft 14 aus der Mischvorrichtung 30, welche dem thermischen Trockner 12 zugeführt wird, kann eine Temperatur von etwa 110°C bis 150°C aufweisen. Die aus dem thermischen Trockner der Mischvorrichtung 30 wieder zugeführte Luft 14 kann eine Temperatur von etwa 50°C bis 80°C aufweisen. Die den thermischen Trockner in Richtung des Wärmetauschers 17 verlassende Luft kann eine Temperatur von etwa 50°C bis 80°C aufweisen. Deren Luftfeuchtigkeit beträgt etwa 50 bis 70%. Die den Wärmetauscher 17 verlassende Abluft 22 weist eine Luftfeuchtigkeit von etwa 100% auf. Mit dem hier beschriebenen Verfahren ist ein energetischer Gesamtwirkungsgrad bei Betrieb des Blockheizkraftwerks mit einem Gasmotor von über 80% möglich.

### Bezugszeichenliste

- 10: Trocknungshalle
- 12: thermischer Trockner
- 14: Luft
- 16: Umgebungsluft
- 17: Wärmetauscher
- 18: erwärmte Umgebungsluft
- 20: Kondensat
- 22: Abluft
- 24: Filter
- 26: Abwasserreinigungsvorrichtung
- 28: weiterer Wärmetauscher
- 30: Mischvorrichtung
- 32: Brennstoff
- 34: Blockheizkraftwerk
- 36: Abgas
- 38: Kühlflüssigkeit

## Patentansprüche

1. Verfahren zum Trocknen von Schlamm mit folgenden Schritten:
a) Aufbringen eines einen Trockensubstanzgehalt von 15% bis 30% aufweisenden Schlamms auf einen Boden einer Trocknungshalle (10) oder dort bereits vorhandenen Schlamm,
b) Vortrocknen des Schlamms in der Trocknungshalle (10), wobei der Schlamm durchmischt wird,
c) Einbringen zumindest eines Teils des vorgetrockneten Schlamms in einen beheizten thermischen Trockner (12), wobei der jeweils in den thermischen Trockner (12) eingebrachte Schlamm in der Trocknungshalle (10) durch Durchführung des Schritts a) durch einen einen Trockensubstanzgehalt von 15% bis 30% aufweisenden Schlamm ersetzt wird, der dann ebenfalls Schritt b) durchläuft,
d) Trocknen des Schlamms im thermischen Trockner (12) bis zu einem Trockensubstanzgehalt von 80% bis 95%, wobei der Schlamm von Feuchtigkeit aus dem Schlamm aufnehmender Luft (14) überströmt oder durchströmt wird, wobei die Luft (14) auf eine Temperatur in einem Bereich von 70°C bis 160°C gebracht wird, oder wobei durch Erwärmen des Schlamms Wasserdampf mit einer Temperatur von 100°C bis 160°C aus dem Schlamm freigesetzt wird, wobei der Schlamm nach Erreichen des Trockensubstanzgehalt von 80% bis 95% aus dem thermischen Trockner (12) ausgebracht wird, wobei der aus dem thermischen Trockner jeweils ausgebrachte Schlamm im thermischen Trockner (12) durch Durchführung des Schritts c) durch vorgetrockneten Schlamm ersetzt wird, der dann ebenfalls Schritt d) durchläuft,
e) Hindurchleiten der bei Schritt d) erwärmten Luft (14) oder des Wasserdampfs durch einen ersten Bereich eines Wärmetauschers (17), der in einem zweiten Bereich von Umgebungsluft (16) durchströmt wird, wobei die bei Schritt d) erwärmte Luft (14) oder der Wasserdampf unter Kondensation der darin enthaltenen Feuchtigkeit Wärme an die Umgebungsluft (16) abgibt, wobei die Luft (14) oder der Wasserdampf auf eine Temperatur im Bereich von 10°C bis 60°C abgekühlt und die Umgebungsluft (16) auf eine höchstens 40 K über der Umgebungstemperatur liegende Temperatur von höchstens 50°C erwärmt wird und
f) Fördern des Vortrocknens gemäß Schritt b) durch Einleiten der bei Schritt e) erwärmten Umgebungsluft (18) in die Trocknungshalle (10), so dass die Umgebungsluft (16) auf oder über die Oberfläche des auf den Boden der Trocknungshalle (10) aufgebrachten Schlamms strömt,
wobei eine Erhöhung oder Erniedrigung des Drucks der Luft (14), des Wasserdampfs oder der Umgebungsluft (16) beim gesamten Verfahren ausschließlich dem Befördern der Luft (14), des Wasserdampfs oder der Umgebungsluft (16) dient.

2. Verfahren nach Anspruch 1, wobei die Trocknungshalle (10) eine Vorrichtung zur Lufterwärmung mittels Sonnenstrahlung, insbesondere einen als Luftkollektor ausgebildeten Sonnenkollektor, aufweist oder gewächshausartig ausgebildet ist und eine im Wesentlichen transparente Gebäudehülle aufweist, wobei das Vortrocknen des Schlamms unter Ausnutzung von in den Luftkollektor oder in die Trocknungshalle (10) einstrahlender Sonnenstrahlung erfolgt.

3. Verfahren nach Anspruch 1 oder 2, wobei die Umgebungsluft (16) bei Durchführung des Schritts e) auf eine Temperatur von weniger als 50°C, insbesondere weniger als 40°C, insbesondere weniger als 35°C, insbesondere höchstens 30°C, erwärmt wird.

4. Verfahren nach einem der vorhergehenden Ansprüche, wobei die Temperatur bei Durchführung des Schritts e) höchstens 30 K, insbesondere höchstens 20 K, insbesondere höchstens 10 K, über der Umgebungstemperatur liegt.

5. Verfahren nach einem der vorhergehenden Ansprüche, wobei ein bei Durchführung des Schritts e) entstehendes Kondensat (20) eine Temperatur von höchstens 60°C, insbesondere höchstens 50°C, insbesondere höchstens 45°C, insbesondere höchstens 35°C, aufweist.

6. Verfahren nach einem der vorhergehenden Ansprüche, wobei der Schlamm bei Durchführung des Schritts c) und/oder des Schritts d) auf einem, insbesondere luftdurchlässigen, Förderband bewegt wird.

7. Verfahren nach einem der vorhergehenden Ansprüche, wobei bei der Kondensation gemäß Schritt e) entstehendes Kondensat (20), insbesondere nach Absenken des pH-Werts des Kondensats durch Zusatz einer Säure, zum Erwärmen des Bodens der Trocknungshalle (10) und/oder zum Befeuchten eines biologischen Filters (24) zur Reinigung von bei dem Verfahren entstehender Abluft (22) und/oder zum Befeuchten von Abluft (22) aus der Trocknungshalle (10) verwendet wird.

8. Verfahren nach einem der vorhergehenden Ansprüche, wobei den thermischen Trockner (12) direkt umgebende und vom thermischen Trockner (12) erwärmte weitere Luft (14) ebenfalls in die Trocknungshalle (10) eingeleitet wird, so dass diese auf oder über die Oberfläche des auf den Boden der Trocknungshalle (10) aufgebrachten Schlamms strömt.

9. Verfahren nach einem der vorhergehenden Ansprüche, wobei die Trocknungshalle (10) auch zur Annahme und Lagerung von einen Trockensubstanzgehalt von 15% bis 30% aufweisendem und/oder zur Lagerung von gemäß Schritt b) vorgetrocknetem Schlamm dient.

10. Verfahren nach einem der vorhergehenden Ansprüche, wobei der Schlamm beim Vortrocknen auf eine Maximaltemperatur von weniger als 50°C, insbesondere eine Maximaltemperatur von 20°C bis 40°C erwärmt wird.

11. Verfahren nach einem der vorhergehenden Ansprüche, wobei der Schlamm bei Durchführung des Schritts b) bis zu einem Trockensubstanzgehalt von 25% bis 70%, insbesondere 40% bis 60%, insbesondere 50% bis 60%, vorgetrocknet wird.

12. Verfahren nach einem der vorhergehenden Ansprüche, wobei die Luft (14) bei Durchführung des Schritts d) auf eine Temperatur in einem Bereich von 90°C bis 150°C, insbesondere 90°C bis 130°C, insbesondere 90°C bis 110°C, gebracht wird.

13. Verfahren nach einem der vorhergehenden Ansprüche, wobei die Luft (14) oder der Wasserdampf bei Durchführung des Schritts e) auf eine Temperatur im Bereich von 10°C bis 50°C, insbesondere 10°C bis 40°C, abgekühlt wird.

14. Vorrichtung zur Durchführung eines Verfahrens nach einem der vorhergehenden Ansprüche umfassend
- eine Trocknungshalle (10) mit einer Vorrichtung zum Durchmischen von auf dem Boden der Trocknungshalle aufgebrachtem Schlamm,
- einen beheizten thermischen Trockner (12) mit einer Bandfördereinrichtung zum kontinuierlichen Transport des Schlamms durch den thermischen Trockner (12), wobei der thermische Trockner (12) so ausgelegt ist, dass darin der Schlamm von Feuchtigkeit aus dem Schlamm aufnehmender Luft überströmt oder durchströmt werden kann, wobei die Luft auf eine Temperatur in einem Bereich von 70°C bis 160°C gebracht werden kann oder dass durch Erwärmen des Schlamms Wasserdampf mit einer Temperatur von 100°C bis 160°C aus dem Schlamm freigesetzt werden kann,
- einen Wärmetauscher (17) mit einem ersten Bereich und einem zweiten Bereich, wobei ein Wärmeaustausch zwischen dem ersten und dem zweiten Bereich erfolgen kann, eine erste Leitung, die den ersten Bereich dampf- oder luftleitend mit dem thermischen Trockner (12) verbindet, eine zweite Leitung, die den zweiten Bereich mit der Umgebung luftleitend verbindet und eine dritte Leitung, die den zweiten Bereich mit der Trocknungshalle (10) verbindet, und
- mindestens eine Vorrichtung zur Förderung des Dampfs oder der Luft (14) und der Umgebungsluft (16) in der ersten, zweiten und dritten Leitung.

15. Vorrichtung nach Anspruch 14, wobei die Vorrichtung weiterhin ein Blockheizkraftwerk (34) und eine vierte Leitung zur direkten und indirekten Zuführung des aus dem Betrieb des Blockheizkraftwerks (34) resultierenden Abgases (36) zum thermischen Trockner (12) umfasst.

## Claims

1. A process for drying sludge having the following steps:
a) applying a sludge having a dry matter content of 15% to 30% to a floor of a drying hall (10) or to sludge already present there,
b) predrying the sludge in the drying hall (10), wherein the sludge is mixed,
c) introducing at least a part of the predried sludge into a heated thermal dryer (12), wherein the sludge introduced in each case into the thermal dryer (12) is re-placed in the drying hall (10) by a sludge having a dry matter content of 15% to 30% by carrying out step a), which sludge then likewise passes through step b),
d) drying the sludge in the thermal dryer (12) to a dry matter content of 80% to 95%, wherein air (14) taking up moisture from the sludge flows over or through the sludge, wherein the air (14) is brought to a temperature in a range from 70°C to 160°C, or wherein, by heating the sludge, water vapor at a temperature of 100°C to 160°C is liberated from the sludge, wherein the sludge, after achieving the dry matter content of 80% to 95%, is discharged from the thermal dryer (12), wherein the sludge discharged from the thermal dryer (12) in each case is replaced by predried sludge by carrying out step c), which predried sludge then likewise passes through step d),
e) passing the air (14) heated in step d), or the water vapor, through a first region of a heat exchanger (17), through which, in a second region, ambient air (16) flows, wherein the air (14) heated in step d) or the water vapor, with condensation of the moisture present therein, releases heat to the ambient air (16), wherein the air (14) or the water vapor is cooled to a temperature in the range from 10°C to 60°C, and the ambient air (16) is heated to a temperature of at most 50°C which is at most 40 K above the ambient temperature and
f) promoting the predrying according to step b) by introducing the ambient air (18) that is heated in step e) into the drying hall (10), in such a manner that the ambient air (16) flows on or above the surface of the sludge applied to the floor of the drying hall (10),
wherein an increase or decrease in the pressure of the air (14), the water vapor or the ambient air (16) in the overall process serves solely for transporting the air (14), the water vapor or the ambient air (16).

2. The process as claimed in claim 1, wherein the drying hall (10) has a device for air heating by means of solar radiation, in particular a solar collector constructed as an air collector, or is constructed in a greenhouse manner and has a substantially transparent building shell, wherein the predrying of the sludge occurs utilizing solar radiation radiating into the air collector or into the drying hall (10).

3. The process as claimed in claim 1 or 2, wherein the ambient air (16) is heated when step e) is being carried out to a temperature of below 50°C, in particular below 40°C, in particular below 35°C, in particular at most 30°C.

4. The process as claimed in any one of the preceding claims, wherein the temperature when step e) is being carried out is at most 30 K, in particular at most 20 K, in particular at most 10 K, above ambient temperature.

5. The process as claimed in any one of the preceding claims, wherein a condensate (20) formed when step e) is being carried out has a temperature of at most 60°C, in particular at most 50°C, in particular at most 45°C, in particular at most 35°C.

6. The process as claimed in any one of the preceding claims, wherein the sludge, when step c) and/or step d) is being carried out, is moved on an, in particular air-permeable, conveyor belt.

7. The process as claimed in any one of the preceding claims, wherein condensate (20) formed during the condensation according to step e), in particular after decreasing the pH of the condensate by addition of an acid, is used for heating the floor of the drying hall (10) and/or for moistening a biological filter (24) for purifying exhaust air (22) formed in the process and/or for moistening exhaust air (22) from the drying hall (10).

8. The process as claimed in any one of the preceding claims, wherein further air (14) directly surrounding the thermal dryer (12) and heated by the thermal dryer (12) is likewise introduced into the drying hall (10), in such a manner that the further air (14) flows on or over the surface of the sludge applied to the floor of the drying hall (10).

9. The process as claimed in any one of the preceding claims, wherein the drying hall (10) also serves for receiving and storing sludge having a dry matter content of 15% to 30%, and/or for storing sludge that is predried according to step b).

10. The process as claimed in any one of the preceding claims, wherein the sludge, during the predrying, is heated to a maximum temperature of below 50°C, in particular a maximum temperature of 20°C to 40°C.

11. The process as claimed in any one of the preceding claims, wherein the sludge, when step b) is being carried out, is predried to a dry matter content of 25% to 70%, in particular 40% to 60%, in particular 50% to 60%.

12. The process as claimed in any one of the preceding claims, wherein the air (14), when step d) is being carried out, is brought to a temperature in a range from 90°C to 150°C, in particular 90°C to 130°C, in particular 90°C to 110°C.

13. The process as claimed in any one of the preceding claims, wherein the air (14) or the water vapor, when step e) is being carried out, is cooled to a temperature in the range from 10°C to 50°C, in particular 10°C to 40°C.

14. A device for carrying out a process as claimed in any one of the preceding claims comprising
- a drying hall (10) having a device for mixing sludge that is applied to the floor of the drying hall,
- a heated thermal dryer (12) having a conveyor belt appliance for continuous transport of the sludge through the thermal dryer (12), wherein the thermal dryer (12) is designed such that, therein, air taking up moisture from the sludge can flow over or through the sludge, wherein the air can be brought to a temperature in a range from 70°C to 160°C, or that by heating the sludge, water vapor at a temperature of 100°C to 160°C can be released from the sludge,
- a heat exchanger (17) having a first region and a second region, wherein a heat exchange can proceed between the first region and the second region, a first conduit which connects the first region vapor- or air-conductingly to the thermal dryer (12), a second conduit which connects the second region air-conductingly to the surroundings, and a third conduit which connects the second region to the drying hall (10), and
- at least one device for transporting the vapor or the air (14) and the ambient air (16) in the first, second and third conduits.

15. The device as claimed in claim 14, wherein the device additionally comprises a combined heat and power plant (34) and a fourth conduit for the direct and indirect feeding of the exhaust gas (36) resulting from operation of the combined heat and power plant (34) to the thermal dryer (12).

## Revendications

1. Procédé de séchage de boue avec les étapes suivantes:
a) application d'une boue présentant une teneur en substance sèche de 15 % à 30 % sur un sol d'une salle de séchage (10) ou de boue qui y est déjà présente,
b) préséchage de la boue dans la salle de séchage (10), dans lequel la boue est mélangée,
c) introduction d'au moins une partie de la boue préséchée dans un séchoir thermique chauffé (12), dans lequel la boue introduite à chaque fois dans le séchoir thermique (12) dans la salle de séchage (10) est remplacée par réalisation de l'étape a) par une boue présentant une teneur en substance sèche de 15 % à 30 % qui passe ensuite également par l'étape b),
d) séchage de la boue dans le séchoir thermique (12) jusqu'à une teneur en substance sèche de 80 % à 95 %, dans lequel la boue est inondée ou parcourue d'air (14) recevant l'humidité provenant de la boue, dans lequel l'air (14) est amené à une température dans une région de 70°C à 160°C, ou dans lequel de la vapeur d'eau avec une température de 100°C à 160°C est libérée de la boue par chauffage de la boue, dans lequel la boue est récupérée du séchoir thermique (12) après atteinte de la teneur en substance sèche de 80 % à 95 %, dans lequel la boue récupérée à chaque fois du séchoir thermique est remplacée dans le séchoir thermique (12) par réalisation de l'étape c) par de la boue préséchée qui passe ensuite également par l'étape d),
e) guidage de l'air (14) chauffé à l'étape d) ou de la vapeur d'eau à travers une première région d'un échangeur de chaleur (17) qui est parcouru dans une seconde région par de l'air ambiant (16), dans lequel l'air (14) chauffé à l'étape d) ou la vapeur d'eau restitue par condensation de l'humidité contenue dans celui-ci/celle-ci de la chaleur à l'air ambiant (16), dans lequel l'air (14) ou la vapeur d'eau est refroidi(e) à une température dans la région de 10°C à 60°C et l'air ambiant (16) est chauffé à une température située 40 K maximum au-dessus de la température ambiante de 50°C maximum et
f) stimulation du préséchage selon l'étape b) par introduction de l'air ambiant (18) chauffé à l'étape e) dans la salle de séchage (10) de sorte que l'air ambiant (16) s'écoule sur ou au-dessus de la surface de la boue appliquée sur le sol de la salle de séchage (10),
dans lequel une augmentation ou un abaissement de la pression de l'air (14), de la vapeur d'eau ou de l'air ambiant (16) sert exclusivement à l'acheminement de l'air (14), de la vapeur d'eau ou de l'air ambiant (16) lors de l'ensemble du procédé.

2. Procédé selon la revendication 1, dans lequel la salle de séchage (10) présente un dispositif pour le chauffage d'air au moyen de rayonnement solaire, notamment un capteur solaire réalisé en tant que capteur d'air, ou est réalisée à la manière d'une serre et présente une enveloppe de bâtiment essentiellement transparente, dans lequel le préséchage de la boue s'effectue en exploitant le rayonnement solaire irradiant dans le capteur d'air ou dans la salle de séchage (10).

3. Procédé selon la revendication 1 ou 2, dans lequel l'air ambiant (16) est chauffé lors de la réalisation de l'étape e) à une température de moins de 50°C, notamment moins de 40°C, notamment moins de 35°C, notamment 30°C maximum.

4. Procédé selon une des revendications précédentes, dans lequel la température se situe lors de la réalisation de l'étape e) à 30 K maximum, notamment 20 K maximum, notamment 10 K maximum, au-dessus de la température ambiante.

5. Procédé selon une des revendications précédentes, dans lequel un condensat (20) apparaissant lors de la réalisation de l'étape e) présente une température de 60°C maximum, notamment 50°C maximum, notamment 45°C maximum, notamment 35°C maximum.

6. Procédé selon une des revendications précédentes, dans lequel la boue est déplacée lors de la réalisation de l'étape c) et/ou de l'étape d) sur une bande transporteuse notamment perméable à l'air.

7. Procédé selon une des revendications précédentes, dans lequel du condensat (20) apparaissant lors de la condensation selon l'étape e) est utilisé, notamment après abaissement de la valeur de pH du condensat par addition d'un acide, pour le chauffage du sol de la salle de séchage (10) et/ou pour l'humidification d'un filtre biologique (24) en vue du nettoyage d'air vicié (22) apparaissant lors du procédé et/ou en vue de l'humidification d'air vicié (22) provenant de la salle de séchage (10).

8. Procédé selon une des revendications précédentes, dans lequel de l'air supplémentaire (14) entourant directement le séchoir thermique (12) et chauffé par le séchoir thermique (12) est également introduit dans la salle de séchage (10) de sorte que celui-ci s'écoule sur ou au-dessus de la surface de la boue appliquée sur le sol de la salle de séchage (10).

9. Procédé selon une des revendications précédentes, dans lequel la salle de séchage (10) sert également à la réception et au stockage de boue présentant une teneur en substance sèche de 15 % à 30 % et/ou au stockage de boue préséchée selon l'étape b).

10. Procédé selon une des revendications précédentes, dans lequel la boue est chauffée lors du préséchage à une température maximale de moins de 50°C, notamment une température maximale de 20°C à 40°C.

11. Procédé selon une des revendications précédentes, dans lequel la boue est préséchée lors de la réalisation de l'étape b) jusqu'à une teneur en substance sèche de 25 % à 70 %, notamment 40 % à 60 %, notamment 50 % à 60 %.

12. Procédé selon une des revendications précédentes, dans lequel l'air (14) est amené lors de la réalisation de l'étape d) à une température dans une région de 90°C à 150°C, notamment 90°C à 130°C, notamment 90°C à 110°C.

13. Procédé selon une des revendications précédentes, dans lequel l'air (14) ou la vapeur d'eau est refroidi(e) lors de la réalisation de l'étape e) à une température dans la région de 10°C à 50°C, notamment 10°C à 40°C.

14. Dispositif pour la réalisation d'un procédé selon une des revendications précédentes comprenant
- une salle de séchage (10) avec un dispositif pour le mélange de boue appliquée sur le sol de la salle de séchage,
- un séchoir thermique chauffé (12) avec un dispositif de transport par bande pour le transport continu de la boue à travers le séchoir thermique (12), dans lequel le séchoir thermique (12) est conçu de sorte que la boue peut être inondée ou parcourue d'air recevant l'humidité provenant de la boue là-dedans, dans lequel l'air peut être amené à une température dans une région de 70°C à 160°C ou que de la vapeur d'eau ayant une température de 100°C à 160°C peut être libérée de la boue par chauffage de la boue,
- un échangeur de chaleur (17) avec une première région et une seconde région, dans lequel un échange de chaleur entre la première et la seconde région peut se produire, une première conduite qui connecte la première région en guidant la vapeur ou l'air au séchoir thermique (12), une deuxième conduite qui connecte la seconde région à l'environnement en guidant l'air et une troisième conduite qui connecte la seconde région à la salle de séchage (10), et
- au moins un dispositif pour le transport de la vapeur ou de l'air (14) et de l'air ambiant (16) dans les première, deuxième et troisième conduites.

15. Dispositif selon la revendication 14, dans lequel le dispositif comprend en outre un cogénérateur (34) et une quatrième conduite pour l'acheminement direct et indirect du gaz d'échappement (36) résultant de l'exploitation du cogénérateur (34) vers le séchoir thermique (12).
